# EUROPÄISCHE PATENTSCHRIFT

(11) **EP 3 357 143 B1**
(45) Veröffentlichungstag und Bekanntmachung des Hinweises auf die Patenterteilung: **06.03.2019**
(21) Anmeldenummer: 16777945.3
(22) Anmeldetag: 26.09.2016
(51) Int. Cl.: F16L 25/02, F16L 39/00, F16L 41/03, H02K 3/22, H02K 9/19

(54) **VERBINDUNGSSTÜCK**
CONNECTOR
CONNECTEUR

(30) Priorität: 02.10.2015 DE 102015116811
(43) Veröffentlichungstag der Anmeldung: 08.08.2018
(73) Patentinhaber: Dynamic E Flow GmbH, 87600 Kaufbeuren (DE)
(72) Erfinder: NADERER, Michael, 5020 Salzburg (AT); SCHWEINERT, Nikolaus, 87600 Kaufbeuren (DE)
(74) Vertreter: Keilitz, Wolfgang
(86) Internationale Anmeldenummer: PCT/EP2016/072807
(87) Internationale Veröffentlichungsnummer: WO 2017/055202

(56) Entgegenhaltungen:
- EP-A1- 1 803 983
- WO-A1-2015/150556

## Beschreibung

Die vorliegende Erfindung betrifft ein Verbindungsstück zum Verbinden von einem elektrischen Hohlleiter und einer Kühlmittelleitung, umfassend: ein fluiddichtes, einen hohlen Innenraum aufweisendes Gehäuse; eine Hohlleiteröffnung in dem Gehäuse zum Aufnehmen des elektrischen Hohlleiters; eine Kühlmittelleitungsöffnung in dem Gehäuse zum Aufnehmen der Kühlmittelleitung; und ein elektrisch isolierendes Trennelement, wobei: der Innenraum die Hohlleiteröffnung und die Kühlmittelleitungsöffnung hydraulisch verbindend ausgebildet ist; das Gehäuse ein kühlmittelleitungsseitiges Gehäuseteil und ein von dem kühlmittelleitungsseitigen Gehäuseteil separierbares hohlleiterseitiges Gehäuseteil umfasst; und das Trennelement zwischen dem kühlmittelleitungsseitigen Gehäuseteil und dem hohlleiterseitigen Gehäuseteil angeordnet ist, das kühlmittelleitungsseitige Gehäuseteil und das hohlleiterseitige Gehäuseteil voneinander beabstandend ausgebildet ist und einen Kühlmittelkanal aufweist, wobei der Kühlmittelkanal zumindest einen Teil des Innenraumes bereitstellend ist.

Ein elektrischer Hohlleiter im Sinne der vorliegenden Erfindung ist ein Hohlleiter, der zum hydraulischen Leiten des Kühlmittels und zum elektrischen Leiten von elektrischen Strömen einsetzbar ist. Insbesondere ist der elektrische Hohlleiter rundrohrförmig ausgebildet und weist einen Außendurchmesser in einem Bereich von 1,0 mm bis 3,2 mm auf.

Das in dem elektrischen Hohlleiter und der Kühlmittelleitung strömende Kühlmittel besteht aus einem elektrisch isolierenden Fluid, wobei das Fluid eine Flüssigkeit oder ein Gas ist. Falls das Fluid ein Gas ist, so sind alle Bezugnahmen auf Hydraulik durch Pneumatik zu ersetzen. Beispielsweise ist dann der Innenraum die Hohlleiteröffnung und die Kühlmittelleitungsöffnung pneumatisch verbindend ausgebildet.

Ein gattungsgemäßes Verbindungsstück ist aus der internationalen Patentanmeldung WO 2015 / 150 556 A9 der Anmelderin bekannt, die nachveröffentlichter Stand der Technik zu der vorliegenden Anmeldung ist. Damit das gattungsgemäße Verbindungsstück bei sehr hohen Drücken, beispielsweise größer 100 bar, und/oder Temperaturen, beispielsweise größer 100°C, dauerhaft dicht ist, bedarf es eines äußerst präzisen Zusammenbaus des gattungsgemäßen Verbindungsstückes, was die Herstellungskosten und die Fehleranfälligkeit erhöht.

Es ist daher Aufgabe der vorliegenden Erfindung, ein Verbindungsstück der eingangs genannten Art anzugeben, das einfach und fehlertolerant herstellbar ist.

Zur Lösung dieser Aufgabe schlägt die vorliegende Erfindung ein Verbindungsstück der eingangs genannten Art vor, wobei das Trennelement als eine Kugel ausgebildet ist. Mit großem Vorteil sorgt die Kugel bei dem Zusammenbau des erfindungsgemäßen Verbindungsstückes für eine automatische Zentrierung des kühlmittelleitungsseitigen Gehäuseteiles relativ zu dem hohlleiterseitigen Gehäuseteil. Spätestens kurz vor einer Montageendlage bewirkt die Geometrie der Kugel eine exakte Ausrichtung des kühlmittelleitungsseitigen Gehäuseteiles relativ zu dem hohlleiterseitigen Gehäuseteil. Ein Versatz zwischen dem kühlmittelleitungsseitigen Gehäuseteil und dem hohlleiterseitigen Gehäuseteil, der zu einem Verlust der Dichtigkeit des erfindungsgemäßen Verbindungsstückes führen könnte, ist konstruktiv ausgeschlossen. Somit ist das erfindungsgemäße Verbindungsstück einfach und fehlertolerant herstellbar, ohne an Funktionalität zu verlieren. Des Weiteren ist die Kugel auf Grund ihrer Geometrie optimal druckresistent. Eine insbesondere bei hohen Drücken im Innenraum erforderliche günstige Druckverteilung hilft, materialermüdende Druck- und/oder Spannungsspitzen zu vermeiden, was eine Standzeit des erfindungsgemäßen Verbindungsstückes deutlich verlängert. Der Kühlmittelkanal der Kugel ist eine Durchgangsöffnung, insbesondere eine Durchgangsbohrung.

In einer besonders vorteilhaften Ausgestaltung der vorliegenden Erfindung besteht das Trennelement aus einem keramischen Material. Keramische Materialien sind hinreichend druckresistent, hitzeresistent und elektrisch isolierend. Ein bevorzugtes keramisches Material ist Zirconiumdioxid. In einer alternativen Ausgestaltung der vorliegenden Erfindung besteht das Trennelement aus Polytetrafluorethylen (PTFE), das bei geringeren Drücken und niedrigeren Temperaturen ausreichend stabil ist.

In einer sehr vorteilhaften Ausgestaltung der vorliegenden Erfindung umfasst das Verbindungsstück ein in der Hohlleiteröffnung angeordnetes, elektrisch leitendes Anschlussstück zum Befestigen des elektrischen Hohlleiters an dem hohlleiterseitigen Gehäuseteil, wobei das Anschlussstück an einem kugelseitigen Ende des Anschlussstückes eine kugelsegmentförmige oder kegelförmige Ausnehmung aufweist. Das Anschlussstück dient als Adapter zwischen dem in der Regel filigranen elektrischen Hohlleiter und dem hohlleiterseitigen Gehäuseteil. Die kugelsegmentförmige Ausnehmung umschließt die Kugel teilweise und stellt somit eine stabile Verbindung zu der Kugel bereit. Die kugelsegmentförmige oder kegelförmige Ausnehmung und die Kugel sind bezüglicher ihrer Größen aufeinander abgestimmt, wobei ein Durchmesser der Kugel in einem Bereich von 4 mm bis 30 mm liegt. Bevorzugt ist der Durchmesser gleich 8 mm, 10 mm, 12 mm oder 15 mm.

In einer weiteren Ausgestaltung der vorliegenden Erfindung umfasst das Anschlussstück an einem hohlleiterseitigen Ende des Anschlussstückes eine Sammelscheibe, wobei die Sammelscheibe zwei oder mehr Bohrungen zum Aufnehmen von elektrischen Hohlleitern aufweist. Die Sammelscheibe dient zum hydraulischen und elektrischen Zusammenführen von zwei oder mehr elektrischen Hohlleitern in ein Anschlussstück. Bevorzugt weist die Sammelscheibe drei, sechs, neun oder mehr Bohrungen auf. In einer alternativen Ausgestaltung weist die Sammelscheibe lediglich eine Bohrung zum Aufnehmen von einem elektrischen Hohlleiter auf. In diesem Fall ist die Sammelscheibe eine Hülse.

In einer weiterführenden Ausgestaltung der vorliegenden Erfindung umfasst das Anschlussstück eine Kontaktplatte, wobei die Kontaktplatte das hohlleiterseitige Gehäuseteil durchsetzend ausgebildet ist. Die Kontaktplatte stellt einen elektrischen Anschluss für die elektrischen Hohlleiter des Anschlussstückes bereit, der von außerhalb des Gehäuses zugänglich ist.

In einer äußerst vorteilhaften Ausgestaltung der vorliegenden Erfindung weist das Gehäuse zwei oder mehr Innenräume auf, wobei ein erster Innenraum von den Innenräumen und ein von dem ersten Innenraum verschiedener zweiter Innenraum von den Innenräumen innerhalb des Gehäuses hydraulisch voneinander getrennt sind. Durch die zwei oder mehr Innenräume in dem Gehäuse stellt das Verbindungsstück mit großem Vorteil eine Vorrichtung bereit, die einen oder mehr Stromkreisläufe und/oder Kühlkreisläufe mit Zulauf und Ablauf ermöglicht. Das erfindungsgemäße Verbindungsstück fungiert somit als zentrale elektrische und hydraulische Anschlussvorrichtung an einer elektromagnetischen Maschine, die eine Spule umfasst, die mit elektrischen Hohlleitern gewickelt ist.

In einer ersten besonderen Ausgestaltung der vorliegenden Erfindung ist der erste Innenraum mit einer Hohlleiteröffnung hydraulisch verbunden und der zweite Innenraum ist mit drei Hohlleiteröffnungen hydraulisch verbunden. Diese Konfiguration wird beispielsweise bei einer Sternschaltung für Dreiphasenwechselstrom verwendet. Die Hohlleiteröffnung des ersten Innenraumes ist hierbei ein hydraulischer Sternpunkt, der über einen Kühlmittelzulauf mit Kühlmittel versorgt ist. Ausgehend von dem Sternpunkt ist ein oder mehrere elektrische Hohlleiter in drei Arme der Sternschaltung geführt. Von jedem der Arme ist eine Phase, die einen oder mehrere elektrische Hohlleiter umfasst, hydraulisch zurückgeführt zu einer der drei Hohlleiteröffnungen des zweiten Innenraumes, der mit einem Kühlmittelablauf verbunden ist. Sämtliche Hohlleiteröffnungen sind elektrisch gegeneinander isoliert.

In einer zu der ersten besonderen Ausgestaltung alternativen zweiten besonderen Ausgestaltung der vorliegenden Erfindung ist der erste Innenraum mit zwei Hohlleiteröffnungen hydraulisch verbunden und der zweite Innenraum ist mit zwei Hohlleiteröffnungen hydraulisch verbunden. Diese Konfiguration wird beispielsweise bei einer Dreieckschaltung für Dreiphasenwechselstrom verwendet. Die zwei Hohlleiteröffnungen des ersten Innenraumes sind mit einem Kühlmittelzulauf verbunden, wobei eine Hohlleiteröffnung mit einem oder einer Vielzahl an elektrischen Hohlleitern verbunden ist und die andere Hohlleiteröffnung mit einem oder einer Vielzahl an elektrischen Hohlleitern verbunden ist. Die elektrischen Hohlleiter sind in die drei Schenkel der Dreieckschaltung geführt. Von jedem der Schenkel ist eine Phase, die einen oder mehrere elektrische Hohlleiter umfasst, zurückgeführt zu den zwei Hohlleiteröffnungen des zweiten Innenraumes, der mit einem Kühlmittelablauf verbunden ist, wobei eine Hohlleiteröffnung mit einer Vielzahl an elektrischen Hohlleitern verbunden ist und die andere Hohlleiteröffnung mit einem oder einer Vielzahl an elektrischen Hohlleitern verbunden ist. Die jeweils anderen Hohlleiteröffnungen sind elektrisch miteinander verbunden. Ansonsten sind die Hohlleiteröffnungen elektrisch gegeneinander isoliert.

In einer sehr vorteilhaften Ausgestaltung der vorliegenden Erfindung sind das kühlmittelleitungsseitige Gehäuseteil und das hohlleiterseitige Gehäuseteil mittels tellerfedertragender Schrauben miteinander verbunden. Schrauben, insbesondere Stahlschrauben, ermöglichen ein kontinuierliches und hinreichend starkes Anpressen der beiden Gehäuseteile aneinander, um eine dichte Verbindung zwischen den beiden Gehäuseteilen zu erreichen. Ein Anzugsdrehmoment für die Schrauben beträgt etwa 6 Nm. Die Tellerfedern gleichen temperaturbedingte Schwankungen in einer geometrischen Ausdehnung der Gehäuseteile aus.

In einer bevorzugten Ausgestaltung der vorliegenden Erfindung besteht das kühlmittelleitungsseitige Gehäuseteil aus Kupfer und das hohlleiterseitige Gehäuseteil besteht aus glasfaserverstärktem Kunststoff. Das Kupfer ist insbesondere Weichkupfer mit einer Vickers-Härte von kleiner als 50 und einer Zugfestigkeit von etwa 200 N/mm². Weiterhin erweist sich das Verhältnis des Wärmeausdehnungskoeffizienten von Kupfer zu dem Wärmeausdehnungskoeffizienten von zahlreichen keramischen Materialien von 2:1 als optimal, um eine über einen weiten Temperaturbereich dichte Verbindung zwischen dem kühlmittelleitungsseitigen Gehäuseteil und den Kugeln zu erreichen. Der glasfaserverstärkte Kunststoff verleiht dem hohlleiterseitigen Gehäuseteil ausreichende mechanische Stabilität und elektrische Isolationseigenschaften, sodass ein Kurzschluss oder Spannungsdurchschlag zwischen den einzelnen Hohlleiteröffnungen ausgeschlossen ist.

Das erfindungsgemäße Verbindungsstück wird in elektromagnetischen Maschinen verwendet, die mindestens eine Spule umfassen, die mit mindestens einem elektrischen Hohlleiter gewickelt ist. Bevorzugte elektromagnetische Maschinen sind Elektromotoren, Generatoren, Transformatoren, Drosseln, Frequenzumrichter und Batterien. Durch eine entsprechende Anordnung können somit komplette elektrische Systeme mit Hohlleiterkühlung ausgestattet werden, beispielsweise indem Frequenzumrichter, Batterien und Ähnliche angeschlossen werden.

Die Erfindung wird in zwei bevorzugten Ausführungsformen unter Bezugnahme auf die Zeichnungen beispielhaft beschrieben, wobei weitere vorteilhafte Einzelheiten den Figuren der Zeichnungen zu entnehmen sind.

Die Figuren der Zeichnungen zeigen im Einzelnen:
Fig. 1 eine Schnittansicht eines Verbindungsstückes gemäß einer ersten Ausführungsform der vorliegenden Erfindung;
Fig. 2 eine Schnittansicht eines Verbindungsstückes gemäß einer zweiten Ausführungsform der vorliegenden Erfindung; und
Fig. 3 eine weitere Schnittansicht des Verbindungsstückes gemäß der ersten oder der zweiten Ausführungsform der vorliegenden Erfindung.

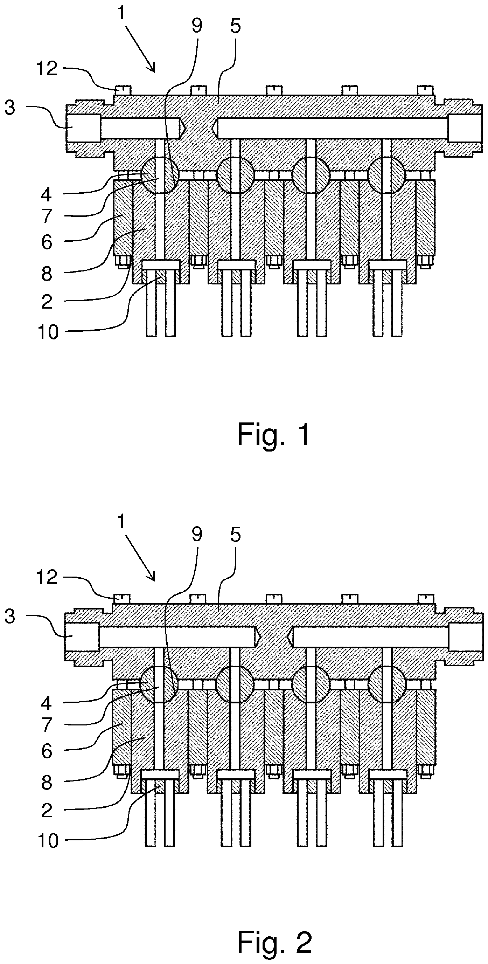

Die **Fig. 1** zeigt eine Schnittansicht eines Verbindungsstückes gemäß einer ersten Ausführungsform der vorliegenden Erfindung. Die erste Ausführungsform wird bei einer Sternschaltung eingesetzt. Das Verbindungsstück gemäß der ersten Ausführungsform dient zum Verbinden von acht elektrischen Hohlleitern und zwei Kühlmittelleitungen, nämlich einem Kühlmittelzulauf und einem Kühlmittelablauf. Das Verbindungsstück umfasst: ein fluiddichtes, zwei hohle Innenräume aufweisendes Gehäuse 1; vier Hohlleiteröffnungen 2 in dem Gehäuse 1 zum Aufnehmen der elektrischen Hohlleiter; zwei Kühlmittelleitungsöffnungen 3 in dem Gehäuse 1 zum Aufnehmen der Kühlmittelleitungen; und vier elektrisch isolierende Trennelemente 4. Das Gehäuse 1 umfasst ein kühlmittelleitungsseitiges Gehäuseteil 5 und ein von dem kühlmittelleitungsseitigen Gehäuseteil 5 separierbares hohlleiterseitiges Gehäuseteil 6. Das kühlmittelleitungsseitige Gehäuseteil 5 besteht aus Kupfer. Das hohlleiterseitige Gehäuseteil 6 besteht aus glasfaserverstärktem Kunststoff.

Jedes der Trennelemente 4 ist zwischen dem kühlmittelleitungsseitigen Gehäuseteil 5 und dem hohlleiterseitigen Gehäuseteil 6 angeordnet, beabstandet das kühlmittelleitungsseitige Gehäuseteil 5 und das hohlleiterseitige Gehäuseteil 6 voneinander und weist einen Kühlmittelkanal 7 auf, wobei der Kühlmittelkanal 7 einen Teil eines Innenraumes bereitstellend ist. Erfindungsgemäß wesentlich ist, dass jedes der Trennelemente 4 als eine Kugel ausgebildet ist. Die Kugeln bestehen aus einem keramischen Material, nämlich aus Zirconiumdioxid. Weiterhin umfasst das Verbindungsstück vier in den Hohlleiteröffnung 2 angeordnete, elektrisch leitende Anschlussstücke 8 zum Befestigen der elektrischen Hohlleiter an dem hohlleiterseitigen Gehäuseteil 6. Jedes der Anschlussstücke 8 weist an einem kugelseitigen Ende des jeweiligen Anschlussstückes 8 eine kugelsegmentförmige Ausnehmung 9 auf, in der die Kugel aufgenommen ist. Alternativ ist die Ausnehmung 9 kegelförmig. Zusätzlich umfasst jedes der Anschlussstücke 8 an einem hohlleiterseitigen Ende des jeweiligen Anschlussstückes 8 eine Sammelscheibe 10. Die Sammelscheibe 10 des einen Anschlussstückes 8, das Teil eines Zulaufinnenraumes ist (linker Innenraum in der **Fig. 1**), weist zwei oder gegebenenfalls mehr Bohrungen zum Aufnehmen von elektrischen Hohlleitern auf. Jede der Sammelscheiben 10 der drei Anschlussstücke 8, die Teil eines Ablaufinnenraumes sind (rechter Innenraum in der **Fig. 1**), weist zwei oder gegebenenfalls mehr Bohrungen zum Aufnehmen von elektrischen Hohlleitern auf. Die Hohlleiter sind mit den Sammelscheiben hartverlötet. Die Sammelscheiben sind mit den jeweiligen Anschlussstücken 8 hartverlötet. Das Anschlussstück 8 des Zulaufinnenraumes ist gegenüber den drei Anschlussstücken 8 des Ablaufinnenraumes innerhalb des Gehäuses 1 hydraulisch getrennt und elektrisch isoliert. Die drei Anschlussstücke 8 des Ablaufinnenraumes sind innerhalb des Gehäuses 1 hydraulisch miteinander verbunden und elektrisch gegeneinander isoliert. Das kühlmittelleitungsseitige Gehäuseteil 5 und das hohlleiterseitige Gehäuseteil 6 sind mittels zehn tellerfedertragender Schrauben 12 miteinander verbunden.

Die **Fig. 2** zeigt eine Schnittansicht eines Verbindungsstückes gemäß einer zweiten Ausführungsform der vorliegenden Erfindung. Die zweite Ausführungsform wird bei einer Dreieckschaltung eingesetzt. Das Verbindungsstück gemäß der zweiten Ausführungsform ist zu dem Verbindungsstück gemäß der ersten Ausführungsform sehr ähnlich aufgebaut. Allerdings sind die vier Anschlussstücke 8 hydraulisch und elektrisch anders verschaltet. Jede der Sammelscheiben 10 der zwei äußeren Anschlussstücke 8 weist zwei oder gegebenenfalls mehr Bohrungen zum Aufnehmen von elektrischen Hohlleitern auf. Jede der Sammelscheiben 10 der zwei inneren Anschlussstücke 8 weist zwei oder gegebenenfalls mehr Bohrungen zum Aufnehmen von elektrischen Hohlleitern auf. Die zwei inneren Anschlussstücke 8 sind elektrisch miteinander verbunden. Ansonsten sind die Anschlussstücke 8 elektrisch gegeneinander isoliert. Der Zulaufinnenraum ist mit zwei Hohlleiteröffnungen 2 hydraulisch verbunden. Der Ablaufinnenraum ist mit zwei Hohlleiteröffnungen 2 hydraulisch verbunden. Die zwei links dargestellten Anschlussstücke 8 des Zulaufinnenraumes (linker Innenraum in der **Fig. 2**) sind innerhalb des Gehäuses 1 hydraulisch miteinander verbunden und elektrisch gegeneinander isoliert. Die zwei rechts dargestellten Anschlussstücke 8 des Ablaufinnenraumes (rechter Innenraum in der **Fig. 2**) sind innerhalb des Gehäuses 1 hydraulisch miteinander verbunden und elektrisch gegeneinander isoliert. Die zwei inneren Anschlussstücke 8 gehören zu unterschiedlichen Innenräumen, sind aber elektrisch miteinander verbunden.

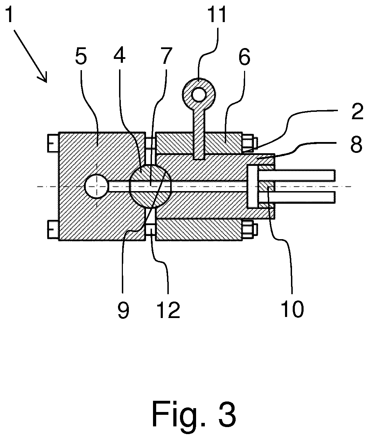

Die **Fig. 3** zeigt eine weitere Schnittansicht des Verbindungsstückes gemäß der ersten oder der zweiten Ausführungsform der vorliegenden Erfindung. Die Schnittebene ist zu den Schnittebenen gemäß den **Fig. 1** und **2** orthogonal orientiert und macht das Anschlussstück 8 des Zulaufinnenraumes einsehbar. Der Durchmesser der Ausnehmung 9 des Anschlussstückes 8 des Zulaufinnenraumes beträgt 15 mm. Das als Kugel ausgebildete Trennelement 4 des Zulaufinnenraumes weist einen Durchmesser von 15 mm auf. Das Anschlussstück 8 umfasst eine Kontaktplatte 11, wobei die Kontaktplatte 11 das hohlleiterseitige Gehäuseteil 6 durchsetzend ausgebildet ist. Die Kontaktplatte 11 weist eine Bohrung auf, um eine stabile Verbindung mit beispielsweise einem elektrischen Kabel oder Kabelschuh zu ermöglichen.

### BEZUGSZEICHENLISTE

- 1: Gehäuse
- 2: Hohlleiteröffnung
- 3: Kühlmittelleitungsöffnung
- 4: Trennelement
- 5: Kühlmittelleitungsseitiges Gehäuseteil
- 6: Hohlleiterseitiges Gehäuseteil
- 7: Kühlmittelkanal
- 8: Anschlussstück
- 9: Ausnehmung
- 10: Sammelscheibe
- 11: Kontaktplatte
- 12: Schraube

## Patentansprüche

1. Verbindungsstück zum Verbinden von einem elektrischen Hohlleiter und einer Kühlmittelleitung, umfassend: ein fluiddichtes, einen hohlen Innenraum aufweisendes Gehäuse (1); eine Hohlleiteröffnung (2) in dem Gehäuse (1) zum Aufnehmen des elektrischen Hohlleiters; eine Kühlmittelleitungsöffnung (3) in dem Gehäuse (1) zum Aufnehmen der Kühlmittelleitung; und ein elektrisch isolierendes Trennelement (4), wobei: der Innenraum, die Hohlleiteröffnung (2) und die Kühlmittelleitungsöffnung (3) hydraulisch verbindend ausgebildet sind; das Gehäuse (1) ein kühlmittelleitungsseitiges Gehäuseteil (5) und ein von dem kühlmittelleitungsseitigen Gehäuseteil (5) separierbares hohlleiterseitiges Gehäuseteil (6) umfasst; das Trennelement (4) zwischen dem kühlmittelleitungsseitigen Gehäuseteil (5) und dem hohlleiterseitigen Gehäuseteil (6) angeordnet ist und das kühlmittelleitungsseitige Gehäuseteil (5) und das hohlleiterseitige Gehäuseteil (6) voneinander beabstandet ausgebildet sind, **dadurch gekennzeichnet, dass** das Trennelement (4) als eine Kugel ausgebildet ist, die einen Kühlmittelkanal (7) aufweist.

2. Verbindungsstück nach Anspruch 1, **dadurch gekennzeichnet, dass** das Trennelement (4) aus einem keramischen Material besteht.

3. Verbindungsstück nach Anspruch 1 oder 2, **dadurch gekennzeichnet, dass** das Verbindungsstück ein in der Hohlleiteröffnung (2) angeordnetes, elektrisch leitendes Anschlussstück (8) zum Befestigen des elektrischen Hohlleiters an dem hohlleiterseitigen Gehäuseteil (6) umfasst, wobei das Anschlussstück (8) an einem kugelseitigen Ende des Anschlussstückes (8) eine kugelsegmentförmige oder kegelförmige Ausnehmung (9) aufweist.

4. Verbindungsstück nach Anspruch 3, **dadurch gekennzeichnet, dass** das Anschlussstück (8) an einem hohlleiterseitigen Ende des Anschlussstückes (8) eine Sammelscheibe (10) umfasst, wobei die Sammelscheibe (10) zwei oder mehr Bohrungen zum Aufnehmen von elektrischen Hohlleitern aufweist.

5. Verbindungsstück nach Anspruch 3 oder 4, **dadurch gekennzeichnet, dass** das Anschlussstück (8) eine Kontaktplatte (11) umfasst, wobei die Kontaktplatte (11) das hohlleiterseitige Gehäuseteil (6) durchsetzend ausgebildet ist.

6. Verbindungsstück nach einem der vorhergehenden Ansprüche, **dadurch gekennzeichnet, dass** das Gehäuse (1) zwei oder mehr Innenräume aufweist, wobei ein erster Innenraum und ein von dem ersten Innenraum verschiedener zweiter Innenraum hydraulisch voneinander getrennt sind.

7. Verbindungsstück nach Anspruch 6, **dadurch gekennzeichnet, dass** der erste Innenraum mit einer Hohlleiteröffnung (2) hydraulisch verbunden ist und der zweite Innenraum mit drei Hohlleiteröffnungen (2) hydraulisch verbunden ist.

8. Verbindungsstück nach Anspruch 6, **dadurch gekennzeichnet, dass** der erste Innenraum mit zwei Hohlleiteröffnungen (2) hydraulisch verbunden ist und der zweite Innenraum mit zwei Hohlleiteröffnungen (2) hydraulisch verbunden ist.

9. Verbindungsstück nach einem der vorhergehenden Ansprüche, **dadurch gekennzeichnet, dass** das kühlmittelleitungsseitige Gehäuseteil (5) und das hohlleiterseitige Gehäuseteil (6) mittels tellerfedertragender Schrauben (12) miteinander verbunden sind.

10. Verbindungsstück nach einem der vorhergehenden Ansprüche, **dadurch gekennzeichnet, dass** das kühlmittelleitungsseitige Gehäuseteil (5) aus Kupfer besteht.

11. Verbindungsstück nach einem der vorhergehenden Ansprüche, **dadurch gekennzeichnet, dass** das hohlleiterseitige Gehäuseteil (6) aus glasfaserverstärktem Kunststoff besteht.

## Claims

1. Connecting piece for connecting an electrical waveguide and a coolant line, comprising: a fluid-tight housing (1) having a hollow interior; a waveguide opening (2) in the housing (1) for receiving the electrical waveguide; a coolant line opening (3) in the housing (1) for receiving the coolant line; and an electrically insulating separating element (4), wherein: the interior, the waveguide opening (2) and the coolant line opening (3) are formed to be hydraulically connecting; the housing (1) comprises a coolant line-side housing part (5) and a waveguide-side housing part (6) which can be separated from the coolant line-side housing part (5); the separating element (4) is arranged between the coolant line-side housing part (5) and the waveguide-side housing part (6), and the coolant line-side housing part (5) and the waveguide-side housing part (6) are formed to be spaced apart from each other, **characterised in that** the separating element (4) is formed as a sphere which has a coolant channel (7).

2. Connecting piece according to claim 1, **characterised in that** the separating element (4) consists of a ceramic material.

3. Connecting piece according to claim 1 or 2, **characterised in that** the connecting piece comprises an electrically conductive attachment piece (8) arranged in the waveguide opening (2) for fastening the electrical waveguide to the waveguide-side housing part (6), wherein the attachment piece (8) has a spherical segment-shaped or spherical recess (9) on a sphere-side end of the attachment piece (8).

4. Connecting piece according to claim 3, **characterised in that** the attachment piece (8) comprises a collecting disc (10) on a waveguide-side end of the attachment piece (8), wherein the collecting disc (10) has two or more bores for receiving electrical waveguides.

5. Connecting piece according to claim 3 or 4, **characterised in that** the attachment piece (8) comprises a contact plate (11), wherein the contact plate (11) is formed to pass through the waveguide-side housing part (6).

6. Connecting piece according to one of the preceding claims, **characterised in that** the housing (1) has two or more interiors, wherein a first interior and a second interior different from the first interior are hydraulically separated from each other.

7. Connecting piece according to claim 6, **characterised in that** the first interior is hydraulically connected to a waveguide opening (2), and the second interior is hydraulically connected to three waveguide openings (2).

8. Connecting piece according to claim 6, **characterised in that** the first interior is hydraulically connected to two waveguide openings (2), and the second interior is hydraulically connected to two waveguide openings (2).

9. Connecting piece according to one of the preceding claims, **characterised in that** the coolant line-side housing part (5) and the waveguide-side housing part (6) are connected to each other by means of cup spring-bearing screws (12).

10. Connecting piece according to one of the preceding claims, **characterised in that** the coolant line-side housing part (5) is consists of copper.

11. Connecting piece according to one of the preceding claims, **characterised in that** the waveguide-side housing part (6) consists of glass-fibre-reinforced plastic.

## Revendications

1. Connecteur destiné à la connexion d'un guide d'ondes électrique et d'un conduit de fluide de refroidissement, comprenant : un boîtier étanche aux fluides (1) comportant un espace interne creux ; une ouverture de guide d'ondes (2) dans le boîtier (1) destinée à recevoir le guide d'ondes électrique ; une ouverture de conduit de fluide de refroidissement (3) dans le boîtier (1) destinée à recevoir le conduit de fluide de refroidissement et un élément de séparation (4) isolant, dans lequel : l'espace interne, l'ouverture de guide d'ondes (2) et l'ouverture de conduit de fluide de refroidissement (3) sont reliés hydrauliquement, le boîtier (1) comprend une partie de boîtier côté conduit de fluide de refroidissement (5) et une partie de boîtier côté guide d'ondes (6) pouvant être séparée de la partie de boîtier côté conduit de fluide de refroidissement (5) ; l'élément de séparation (4) est disposé entre la partie de boîtier côté conduit de fluide de refroidissement (5) et la partie de boîtier côté guide d'ondes (6), et la partie de boîtier côté conduit de fluide de refroidissement (5) et la partie de boîtier côté guide d'ondes (6) sont espacées l'une de l'autre, **caractérisé en ce que** l'élément de séparation (4) est sous forme d'une bille, qui comporte un canal réfrigérant (7).

2. Connecteur selon la revendication 1, **caractérisé en ce que** l'élément de séparation (4) est constitué de matériau céramique.

3. Connecteur selon la revendication 1 ou 2, **caractérisé en ce que** le connecteur comprend un élément de raccordement électriquement conducteur (8) disposé dans l'ouverture de guide d'ondes (2) destiné à la fixation du guide d'ondes électrique sur la partie de boîtier côté guide d'ondes (6), l'élément de raccordement (8) présentant un évidement (9) en forme de segment sphérique ou de forme conique sur une extrémité côté bille de l'élément de raccordement (8).

4. Connecteur selon la revendication 3, **caractérisé en ce que** l'élément de raccordement (8) comprend un disque collecteur (10) sur une extrémité côté guide d'ondes de l'élément de raccordement (8), le disque collecteur (10) présentant au moins deux alésages destinés à la réception du guide d'ondes électrique.

5. Connecteur selon la revendication 3 ou 4, **caractérisé en ce que** l'élément de raccordement (8) comprend une plaque de contact (11), la plaque de contact (11) étant conçue de manière à traverser la partie de boîtier côté guide d'ondes (6).

6. Connecteur selon l'une des revendications précédentes, **caractérisé en ce que** le boîtier (1) comporte au moins deux espaces internes, un premier espace interne et un deuxième espace interne différent du premier espace interne étant séparés hydrauliquement l'un de l'autre.

7. Connecteur selon la revendication 6, **caractérisé en ce que** le premier espace interne est relié hydrauliquement à une ouverture de guide d'ondes (2) et le deuxième espace interne est relié hydrauliquement à trois ouvertures de guide d'ondes (2).

8. Connecteur selon la revendication 6, **caractérisé en ce que** le premier espace interne est relié hydrauliquement à deux ouvertures de guide d'ondes (2) et le deuxième espace interne est relié hydrauliquement à deux ouvertures de guide d'ondes (2).

9. Connecteur selon l'une des revendications précédentes, **caractérisé en ce que** la partie de boîtier côté conduit de fluide de refroidissement (5) et la partie de boîtier côté guide d'ondes (6) sont reliées ensemble à l'aide d'une vis portant une rondelle-ressort (12).

10. Connecteur selon l'une des revendications précédentes, **caractérisé en ce que** la partie de boîtier côté conduit de fluide de refroidissement (5) est constituée de cuivre.

11. Connecteur selon l'une des revendications précédentes, **caractérisé en ce que** la partie de boîtier côté guide d'ondes (6) est constituée de plastique renforcé par des fibres de verre.
